# EUROPÄISCHE PATENTSCHRIFT

(11) **EP 0 733 431 B1**
(45) Veröffentlichungstag und Bekanntmachung des Hinweises auf die Patenterteilung: **19.05.1999**
(21) Anmeldenummer: 96104026.8
(22) Anmeldetag: 14.03.1996
(51) Int. Cl.: B23H 7/08

(54) **Drahtelektrode sowie Verfahren zur Herstellung einer Drahtelektrode, insbesondere für das Funkenerodierverfahren**
Wire electrode and method for manufacturing a wire electrode, in particular for wire electric discharge machining
Fil électrode et méthode de fabrication de l'électrode fil utilisé notamment pour usinage par décharges électriques

(30) Priorität: 24.03.1995 DE 19510740
(43) Veröffentlichungstag der Anmeldung: 25.09.1996
(73) Patentinhaber: Berkenhoff GmbH, 35452 Heuchelheim (DE)
(72) Erfinder: Barthel, Bernd, 35745 Herborn-Merkenbach (DE); Groos, Heinrich, 35745 Herborn (DE); Hermanni, Hans, 35764 Sinn-Fleisbach (DE)
(74) Vertreter: Missling, Arne, Dipl.-Ing.

(56) Entgegenhaltungen:
- EP-A- 0 312 674
- EP-A- 0 334 971
- EP-A- 0 415 501
- EP-A- 0 526 361
- US-A- 4 935 594
- PATENT ABSTRACTS OF JAPAN vol. 015, no. 303 (M-1142), 2.August 1991 & JP-A-03 111126 (HIROYUKI KANAI), 10.Mai 1991,

## Beschreibung

Die Erfindung betrifft ein Verfahren zur Herstellung einer Drahtelektrode für das Funkenerodierverfahren mit einem Kern und einer den Kern umhüllenden Mantelschicht, wobei der Kern ein- oder mehrschichtig ausgebildet sein kann, die äußere Schicht des Kernes aus Kupfer oder eine Kupfer-Zink-Legierung mit überwiegendem Anteil an Alpha-Phasen und die Mantelschicht aus Zink oder einer Zinklegierung besteht.

Drahtelektroden für das Funkenerodierverfahren werden in der Regel mit einem hochfesten Kern hergestellt, der zudem auch ein guter elektrischer Leiter sein sollte. Für hohe Festigkeiten haben sich Kerne aus Messing oder aber auch Verbundkerne bewährt, bei denen eine Stahlseele von einer Kupfer- oder Messing-Schicht umgeben ist. Zur Erhöhung der Schnittleistung derartiger Drahtelektroden werden auf diese eine Mantelschicht aufgebracht, die in der Regel aus Zink oder einer Zinklegierung besteht. Sehr gute Schnittleistungen sind mit Drahtelektroden erzielt worden, die mit einer reinen Zinkbeschichtung versehen sind. Allerdings nimmt die Schnittleistung dieser Elektroden ab, wenn hohe Werkstücke geschnitten werden sollen. Der Grund hierfür besteht darin, daß das reine Zink der Mantelschicht schnell verdampft und somit in kürzester Zeit verbraucht ist, so daß die Drahtelektrode dann mit ihrem Kernmaterial schneidet, was die Schnittleistung insgesamt wieder reduziert.

Versuche haben ergeben, daß bei hohen Werkstücken bessere Schnittleistungen dann erzielt werden, wenn das Zink der Mantelschicht Bestandteil einer Legierung ist. Vorteilhaft hat sich hier herausgestellt, die Mantelschicht aus einem homogenen Beta-Messing herzustellen. Eine derartige Elektrode weist eine sehr gute Schnittleistung auch bei hohen Werkstücken auf. Nachteilig ist jedoch, daß eine derartige Elektrode relativ kostenintensiv in der Herstellung ist. Hier ist zum einen eine genaue Legierungszusammensetzung des Kerns einzuhalten und zum anderen muß eine Diffusion über einen langen Zeitraum bei hoher Temperatur zur Erreichung eines Gleichgewichtszustandes durchgeführt werden. Dieser Zustand muß anschließend durch schnelle Abkühlung fixiert werden. Es ist hier äußerst schwer, bei diesem bekannten Verfahren die Phasenanteile in der Mantelschicht genau zu steuern. Geringfügige Abweichungen beim Herstellungsprozeß führen dazu, daß neben dem Beta-Messing auch Alpha- und/oder Gamma-Messing in der Mantelschicht vorliegt.

Der Erfindung liegt die Aufgabe zugrunde, eine Drahtelektrode der eingangs genannten Art so auszubilden, daß diese zum einen gegenüber einer Drahtelektrode mit einer Mantelschicht aus einer reinen Beta-Phase eine noch bessere Schneidleistung aufweist und zum anderen liegt der Erfindung die Aufgabe zugrunde ein Verfahren zur Herstellung von Drahtelektroden vorzuschlagen, mit dem in kostengünstiger Art und Weise Mantelschichten im wesentlichen aus homogenen Gamma- oder Epsilon-Messing herstellbar sind.

Diese Aufgabe wird für das Verfahren mit den Merkmalen des Anspruches 1 gelöst. Die Drahtelektrode ist durch die Merkmale des Anspruches 4 gekennzeichnet. Die äußere Mantelschicht besteht aus einer Gamma- oder Epsilon-Phase. Vorteilhaft können in die Gamma- oder Epsilon-Phase auch noch inerte harte Phasen eingelagert werden, was den Vorteil mit sich bringt, daß das Ab- und Austragsverhalten des Erodierdrahtes für die erodierten Stoffe weiter verbessert wird.

Die Wahl einer reinen Gamma-Phase, der ggf. harte, inerte Stoffe zugegeben sind, hat sich als noch vorteilhafter im Schneidverhalten als die Beta-Phase herausgestellt. Mit herkömmlichen Verfahren, d. h. der Langzeitdiffusion ist eine derartige Gamma-Phase kaum in reiner Form herzustellen. In der Regel wird ein Mischgefüge erhalten, das Anteile von Alpha-, Beta-, und/oder Gamma-Phase aufweist.

Mit der Erfindung wird ein Verfahren zur Herstellung homogener Mantelschichten aus Gamma- oder Epsilon-Messing vorgeschlagen, das infolge äußerst kurzer Diffusionszeiten, die bedingt sind durch eine hohe Aufheiz- und eine hohe Abkühlgeschwindigkeit sowie eine vergleichsweise geringen Haltezeit, Ungleichgewichtszustände ausnutzt. überraschenderweise bildet sich zunächst Epsilon-Messing, dann Gamma-Messing, wobei das Gamma-Messing in der Mantelschicht eine erheblich größere Wachstumsgeschwindigkeit aufweist, als Beta-Messing, das, sofern es sich in den kurzen mit der Erfindung vorgeschlagenen Diffusionszeiten überhaupt bildet, dann lediglich einen Bruchteil des Wachstumes erfährt wie die Gamma-Phase. Die Beta-Phasen verbleiben praktisch unterhalb der Nachweisgrenze und zeigen sich lediglich als ganz geringe Randsäume, die die sich über die gesamte Mantelschicht erstreckende Gamma-Phase zum Kernbereich hin abgrenzen. Mit diesem erfindungsgemäßen Verfahren ist es möglich somit reine Epsilon- oder Gamma-Phasen auch bei Drahtelektroden zu erzeugen, die bei herkömmlicher Diffusionsglühung ein nebeneinander von Alpha-, Beta- und Gamma-Phasen zeigen würden.

### Beispiel 1:

- *: Kern: CuZn 5; Verzinken 30 µm bei 1,0 mm;
Ziehen von 1,0 auf 0,40 mm;
Glühung: Aufheizen mit 200° K/s,
Glühtemperatur = 600°C
Abkühlgeschwindigkeit = 300° K/sec;
Ziehen von 0,40 auf 0,25mm

### Beispiel 2:

- *: Kern: CuZn 5; Verzinken 30 µm bei 1,2 mm;
Ziehen von 1,2 auf 0,60 mm;
Glühung : Aufheizen mit 40° K/s,
Glühtemperatur = 800°C
Abkühlgeschwindigkeit = 60° K/sec;
Ziehen von 0,60 auf 0,25mm

Die Erfindung wird nachstehend anhand der Zeichnung näher beschreiben, in dieser zeigen
- Fig. 1: einen Schnitt durch einen erfindungsgemäß ausgebildeten Erodierdraht,
- Fig. 2: eine vergrößerte Darstellung des Ausschnittes der Mantelschicht und des Kernes gemäß Fig. 1,
- Fig. 3 bis Fig. 7: die sich in Abhängigkeit der Glühzeit ausbildenden Schichten in der Randzone.

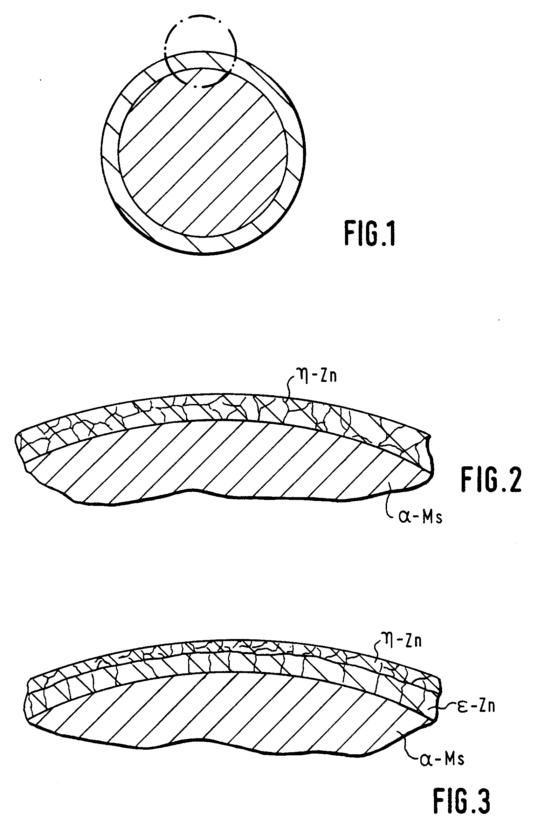

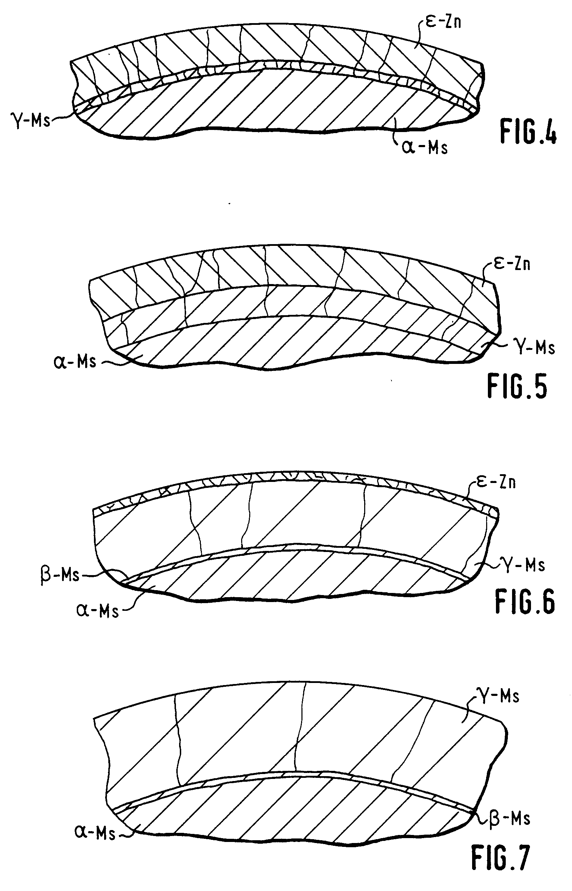

In Fig. 2 ist das Ausgangsmaterial dargestellt. Dieses besteht aus einem Kern aus Alpha-Messing sowie einer Mantelschicht aus Zink (Eta-Zink). Nach erfolgter Aufheizung und kürzester Haltezeit bildet sich im Bereich zwischen Kern und Mantelschicht eine Epsilon-Zink-Schicht aus (Fig. 3), wobei mit wachsender Glühzeit und damit zunehmender Diffusion die Eta-Zink-Schicht in eine Epsilon-Zink-Schicht umgewandelt wird (Fig. 4). In Fig. 4 ist gleichzeitig zu erkennen, daß sich im Übergangsbereich zwischen Kern und Epsilon-Zink-Schicht eine schmale Schicht ausbildet und zwar die Gamma-Schicht. Mit weiter anhaltender Glühzeit weitet sich die Gamma-Schicht aus, so daß die Epsilon-Zink-Schicht durch die Diffusionsvorgänge wiederum in eine Gamma-Schicht umgewandelt wird (Fig. 5). Mit wesentlich geringerer Wachstumsgeschwindigkeit bildet sich im Übergangsbereich zwischen der Gamma-Messing-Schicht und dem Alpha-Messing-Kern eine schmale Beta-Messing-Schicht aus (Fig. 5).

In Fig. 6 ist der Augenblick dargestellt, in dem sich die Mantelschicht in eine Gamma-Messing-Schicht umwandelt, wobei sich im Übergangsbereich zwischen Kern und Gamma-Mantelschicht die Beta-Mantelschicht gegenüber dem in Fig. 5 dargestellten Stadium nur geringfügig vergrößert hat. Allerdings bilden sich in den Gamma-Kristallen einzelne Beta-Messing-Inseln, die andeuten, daß die Gamma-Mantelschicht zu zerfallen beginnt (Fig. 6). Schließlich ist in Fig. 7 im zeitlichen Ablauf der Zustand dargestellt, in dem die Epsilon-Mantelschicht weitgehend zerfallen ist und sich Beta-Mischkristalle im Randbereich zum Kern hin ausgebildet haben.

Die erfindungsgemäße Darstellung von Epsilon-, Gamma- oder Beta-Mantelschichten besteht darin, die Ungleichgewichtszustände während des Diffusionsvorganges auszunützen und den Diffusionsprozess dann zu unterbrechen und damit die Ungleichgewichtszustände zu fixieren, wenn die jeweils gewünschte Mantelschicht erzeugt ist. Ist dieser Zustand erreicht, muß dieses Gefüge durch eine schnelle Abkühlung fixiert werden.

## Patentansprüche

1. Verfahren zur Herstellung einer Drahtelektrode für das Funkenerodierverfahren mit einem Kern und einer den Kern umhüllenden Mantelschicht, wobei der Kern ein- oder mehrschichtig ausgebildet sein kann, die äußere Schicht des Kernes aus Kupfer oder einer Kupfer-Zink-Legierung mit überwiegendem Anteil an Alpha-Phasen und die Mantelschicht aus Zink oder einer Zinklegierung besteht,
dadurch gekennzeichnet, daß
die Mantelschicht bei einer Temperatur auf dem Kern aufgebracht wird, die unter der Temperatur liegt, bei der eine Diffusion eintritt, daß die Drahtelektrode anschließend geglüht wird, wobei die Aufheizgeschwindigkeit mindestens 10° C pro Sekunde beträgt und die Glühtemperatur oberhalb 500° C liegt, jedoch 800° C nicht übersteigt, daß die Glühzeit in Abhängigkeit der zu erzeugenden Mantelschichtstärke und -phase so gewählt wird, daß eine Mantelschicht aus Gamma - und/oder Epsilon-Phase entsteht, daß die Glühzeit zwischen zehn und 300 Sekunden liegt, und daß anschließend die Drahtelektrode abgekühlt wird, wobei die Abkühlgeschwindigkeit größer als 10° C pro Sekunde beträgt.

2. Verfahren nach Anspruch 1, dadurch gekennzeichnet, daß die Drahtelektrode vor, während oder nach der Abkühlung auf ihren Enddurchmesser gezogen wird.

3. Verfahren nach einem der Ansprüche 1 oder 2, dadurch gekennzeichnet, daß die Drahtelektrode vor der Glühung verformt wird.

4. Drahtelektrode für das Funkenerodierverfahren mit einem Kern und einer den Kern umhüllenden Mantelschicht, wobei der Kern aus einer oder mehreren Schichten bestehen kann wobei dessen äußere Schicht aus Kupfer oder einer überwiegend Alpha-Phase enthaltenden Kupfer-Zink-Legierung und die Mantelschicht aus einer Zinklegierung besteht, dadurch gekennzeichnet, daß die Mantelschicht überwiegend aus einer Gamma-Phase besteht.

5. Drahtelektrode nach Anspruch 4, dadurch gekennzeichnet, daß die Mantelschicht nur aus einer Gamma-Phase besteht.

6. Drahtelektrode nach Anspruch 4 oder 5, dadurch gekennzeichnet, daß der Mantelschicht harte, inerte Phasen zugesetzt sind.

7. Drahtelektrode nach Anspruch 6, dadurch gekennzeichnet, daß die harten, inerten Phasen aus Diamanten, Bornitrid, (leitfähiger) Keramik bestehen.

8. Drahtelektrode nach einem der Ansprüche 4 bis 7, dadurch gekennzeichnet, daß der Mantelschicht Graphit zugesetzt ist.

## Claims

1. A method of producing a wire electrode for the electrical-discharge machining process, with a core and a casing layer enclosing the core, wherein the core can be made with one or more layers, the outer layer of the core consisting of copper or a copper-zinc alloy with a preponderant proportion of alpha phases and the casing layer consisting of zinc or a zinc alloy, **characterized in that** the casing layer is applied to the core at a temperature below the temperature at which diffusion occurs, the wire electrode is then annealed, the heating rate amounting to at least 10°C *per* second and the annealing temperature being above 500°C but not exceeding 800°C, the annealing time is selected in such a way as a function of the casing-layer thickness and phase that a casing layer of gamma and/or epsilon phase is produced, the annealing time is between 10 and 300 seconds, and the wire electrode is then cooled, the cooling rate being more than 10°C *per* second.

2. A process according to Claim 1, **characterized in that** the wire electrode is drawn to its final diameter before, during or after the cooling.

3. A process according to one of Claims 1 or 2, **characterized in that** the wire electrode is shaped before the annealing.

4. A wire electrode for the electrical-discharge machining process, with a core and a casing layer enclosing the core, wherein the core can comprise one or more layers, the outer layer of which consists of copper or a copper-zinc alloy preponderantly containing an alpha phase and the casing layer consists of a zinc alloy, **characterized in that** the casing layer consists preponderantly of a gamma phase.

5. A wire electrode according to Claim 4, **characterized in that** the casing layer consists only of a gamma phase.

6. A wire electrode according to Claim 4 or 5, **characterized in that** hard, inert phases are added to the casing layer.

7. A wire electrode according to Claim 6, **characterized in that** the hard, inert phases consist of diamond, boron nitride [or] (conductive) ceramic material.

8. A wire electrode according to one of Claims 4 to 7, **characterized in that** graphite is added to the casing layer.

## Revendications

1. Procédé de fabrication d'un fil-électrode destiné au procédé d'électro-érosion, comportant un noyau et une couche-enveloppe entourant le noyau, le noyau pouvant être formé d'une ou plusieurs couches, la couche extérieure du noyau étant constituée de cuivre ou d'un alliage cuivre-zinc avec une proportion prépondérante de phases alphas, et la couche-enveloppe étant constituée de zinc ou d'un alliage de zinc,
caractérisé en ce que la couche-enveloppe est mise en place sur le noyau à une température inférieure à la température pour laquelle se produit une diffusion, en ce que le fil-électrode est ensuite porté à l'incandescence, la vitesse de chauffage étant d'au moins 10°C par seconde et la température d'incandescence étant au-dessus de 500°C, mais ne dépassant pas 800°C, en ce que la durée d'incandescence est choisie en fonction de l'épaisseur et de la phase de la couche-enveloppe à produire, de telle façon qu'il en résulte une couche-enveloppe formée de phase gamma et/ou de phase epsilon, en ce que la durée d'incandescence est comprise entre 10 et 300 secondes, et en ce qu'ensuite le fil-électrode est refroidi, la vitesse de refroidissement étant supérieure à 10°C par seconde.

2. Procédé suivant la revendication 1, caractérisé en ce que le fil-électrode est étiré à son diamètre final avant, pendant ou après son refroidissement.

3. Procédé suivant l'une des revendications 1 ou 2, caractérisé en ce que le fil électrode est mis en forme avant d'être porté à l'incandescence.

4. Fil-électrode destiné au procédé d'électro-érosion, comportant un noyau et une couche-enveloppe entourant le noyau, le noyau pouvant être constitué d'une ou de plusieurs couches, sa couche extérieure étant constituée de cuivre ou d'un alliage cuivre-zinc comportant une proportion prépondérante de phase alpha, et la couche-enveloppe étant constituée d'un alliage de zinc, caractérisé en ce que la couche-enveloppe est constituée de façon prépondérante de phase gamma.

5. Fil-électrode suivant la revendication 4, caractérisé en ce que la couche enveloppe est constituée seulement d'une phase gamma.

6. Fil-électrode suivant la revendication 4 ou la revendication 5, caractérisé en ce qu'à la couche enveloppe sont ajoutées des phases inertes dures.

7. Fil-électrode suivant la revendication 6, caractérisé en ce que les phases inertes dures sont constituées de diamants, de nitrure de bore, de céramique (conductrice ).

8. Fil-électrode suivant l'une des revendications 4 à 7, caractérisé en ce qu'à la couche enveloppe est ajouté du graphite.
